(19) Europäisches Patentamt
European Patent Office
Office européen des brevets

(11) **EP 0 941 163 B1**

(12) **EUROPÄISCHE PATENTSCHRIFT**

(45) Veröffentlichungstag und Bekanntmachung des Hinweises auf die Patenterteilung:
**19.03.2003  Patentblatt 2003/12**

(21) Anmeldenummer: **98954219.6**

(22) Anmeldetag: **24.09.1998**

(51) Int Cl.$^7$: **B60K 41/02**, F16D 48/06, B60K 31/00

(86) Internationale Anmeldenummer:
**PCT/DE98/02845**

(87) Internationale Veröffentlichungsnummer:
**WO 99/016634 (08.04.1999 Gazette 1999/14)**

(54) **VORRICHTUNG UND VERFAHREN ZUR ERZEUGUNG EINES FEHLERSIGNALS BEI EINEM KRAFTFAHRZEUG**

METHOD AND DEVICE FOR PRODUCING AN ERROR SIGNAL IN A MOTOR VEHICLE

DISPOSITIF ET PROCEDE DE PRODUCTION D'UN SIGNAL D'ERREUR DANS UN VEHICULE AUTOMOBILE

(84) Benannte Vertragsstaaten:
**DE FR GB IT**

(30) Priorität: **30.09.1997  DE 19743089**

(43) Veröffentlichungstag der Anmeldung:
**15.09.1999  Patentblatt 1999/37**

(73) Patentinhaber: **ROBERT BOSCH GMBH**
**70442 Stuttgart (DE)**

(72) Erfinder:
• **FRÖHLICH, Martin**
  **D-76351 Linkenheim-Hochstetten (DE)**
• **BAJIC, Mario**
  **D-71638 Ludwigsburg (DE)**
• **RIES-MÜLLER, Klaus**
  **D-74906 Bad Rappenau (DE)**

(56) Entgegenhaltungen:
**EP-A- 0 241 216          EP-A- 0 441 290**
**DE-A- 3 922 946          DE-A- 4 426 260**
**US-A- 4 671 397**

**Beschreibung**

Stand der Technik

Die Erfindung betrifft eine Vorrichtung und ein Verfahren zur Erzeugung eines Fehlersignals bei einem Kraftfahrzeug mit den Merkmalen der unabhängigen Ansprüche.

Das Dokument EP 0 441 290 offenbart eine Vorrichtung mit einem Automatikgetriebe, mit einem Drehratensensor, der die Motordrehzahl überwacht einem Gangsensor, der den Gang detektiert und einer Steuereinheit, die eine Kupplungs- und Anlassersteuerung in Abhängigkeit der Ausgänge der Sensoren vornimmt. Weiterhin ist die Steuereinheit in der Lage, Fehler der Sensoren zu erkennen.

Für verschiedene Funktionen in der Motorsteuerung (z.B. Leerlaufregelung, Zündwinkeleingriff in Reaktion auf ein Öffnen der Kupplung) und/oder für eine Fahrgeschwindigkeitsoder eine Abstandsregelung wird ein Signal benötigt, das bei einem Kraftfahrzeug den Zustand (geöffnet/geschlossen) der Kupplung angibt. Zur Ermittlung des Betriebszustands der Kupplung kann beispielsweise direkt an dem vom Fahrer betätigbaren Kupplungspedal ein Schaltkontakt angebracht werden. Die Stellung eines solchen Schalters erfaßt dann, ob das Kupplungspedal und damit die Kupplung betätigt ist oder nicht. Der Schalter ist dazu über ein Kabel mit den entsprechenden Steuergeräten (z.B. Motorsteuerungsgerät, Abstandsregelungsgerät) verbunden.

Bei einem Defekt an einem solchen Kupplungsschalter oder bei einem Kabelbruch beziehungsweise bei einem Abfall des Kabels würden die Funktionen in den entsprechenden Steuergeräten nicht optimal beziehungsweise gar nicht ablaufen. Es kann dadurch zu Fehlreaktionen bei den Funktionen kommen, die die Stellung des Kupplungsschalters auswerten.

Die Aufgabe der vorliegenden Erfindung besteht darin, die Funktion eines Kupplungsschalters ohne zusätzlichen Hardware-Aufwand sicher zu überwachen.

Diese Aufgabe wird durch die Merkmale der unabhängigen Ansprüche gelöst.

Vorteile der Erfindung

Die Erfindung geht aus von einem Kraftfahrzeug mit einer im Antriebsstrang des Kraftfahrzeugs angeordneten Kupplung und einem im Antriebsstrang angeordneten und in seiner Getriebeübersetzung veränderbaren Getriebe. Weiterhin sind Mittel vorgesehen, die ein Kupplungssignal erzeugen, das die Betätigung der Kupplung repräsentiert.

Der Kern einer Erfindungsvariante besteht nun darin, daß eine Änderung der Getriebeübersetzung erkannt wird. Erfindungsgemäß sind Überwachungsmittel vorgesehen, mittels der ein Fehlersignal in Abhängigkeit von der erkannten Änderung und dem erzeugten Kupplungssignal erzeugen. Das Fehlersignal gibt dabei an, ob die Mittel, die das Kupplungssignal erzeugen, ordnungsgemäß arbeiten.

Durch die erfindungsgemäße Erzeugung des Fehlersignals kann die Funktion des Kupplungsschalters wirksam diagnostiziert werden. In Reaktion auf einen erkannten Defekt wird insbesondere ein Eintrag in einen Fehlerspeicher vorgenommen.

Hierdurch kann schnell und sicher festgestellt werden, warum bestimmte Funktionen in den entsprechenden Steuergeräten nicht optimal beziehungsweise gar nicht ablaufen.

Durch die erfindungsgemäße Diagnose kann der Kundendienst beziehungsweise der Applikateur (während der Entwicklungsphase der einzelnen Steuergeräte) mit Hilfe des Fehlerspeichers schnell herausfinden, warum z.B. der Fahrzeugmotor einen höheren Kraftstoffverbrauch aufweist, oder die Fahrgeschwindigkeitsregelung und/oder die Abstandsregelung nicht mehr aktivierbar sind.

Besonders vorteilhaft ist es, wenn zur Erzeugung des Fehlersignals die Änderung des erzeugten Kupplungssignals, die in Reaktion auf die Änderung der Getriebeübersetzung erfaßt wird, ausgewertet wird. Hierbei ist insbesondere vorgesehen, daß das Fehlersignal dann erzeugt wird, wenn in Reaktion auf eine vorgebbare Anzahl von Änderungen der Getriebeübersetzung

- keine Änderung des erzeugten Kupplungssignal erfaßt wird oder
- nur eine vorgebbar geringere Anzahl von Änderungen des erzeugten Kupplungssignal als die vorgebbare Anzahl von Änderungen der Getriebeübersetzung erfaßt werden.

In einer vorteilhaften Ausgestaltung der Erfindung ist vorgesehen, daß das Vorliegen eines vorgebbaren ersten Betriebsbereichs des Kraftfahrzeugs erfaßt wird und das Fehlersignal weiterhin in Abhängigkeit von dem erfaßten ersten Betriebsbereich erzeugt wird. Hierbei ist insbesondere vorgesehen, daß der erste Betriebsbereich dadurch vorgegeben ist, daß in diesem ersten Betriebsbereich keine Änderung der Getriebeübersetzung ohne eine Betätigung der Kupplung möglich ist. Zur Erzeugung des Fehlersignals werden dann nur die Änderungen der Getriebeübersetzung herangezogen werden, die während des Vorliegens des ersten Betriebsbereichs stattfinden.

Der Kern dieser Ausgestaltung besteht darin, daß geprüft wird, ob im Betriebsbereich, in dem der Gangwechsel stattfindet, auch jeder Gangwechsel mit einer Kupplungsbetätigung verbunden sein muß. Dies erhöht die Sicherheit der erfindungsgemäßen Diagnose.

Zur Erfassung des Vorliegens des vorgebbaren ersten Betriebsbereichs können Drehzahlgrößen erfaßt werden, die die Ausgangsdrehzahl des Kraftfahrzeugmotors und eine am Getriebe vorliegende Drehzahl repräsentieren. Das Vorliegen des ersten Betriebsbereichs wird dann abhängig von den erfaßten Drehzahlgrößen erfaßt.

In einer weiteren Ausgestaltung der Erfindung ist vorgesehen, daß die Überwachungsmittel derart ausgestaltet sind, daß das Vorliegen eines vorgebbaren zweiten Betriebsbereichs des Kraftfahrzeugs erfaßt wird und das Fehlersignal weiterhin in Abhängigkeit von dem erfaßten zweiten Betriebsbereich erzeugt wird. Hierbei ist insbesondere vorgesehen, daß ein die Stellung des vom Fahrer des Kraftfahrzeugs betätigbaren Fahrpedals repräsentierender Fahrpedalwert und/oder ein die Fahrzeuglängsgeschwindigkeit repräsentierender Geschwindigkeitswert und/oder ein die Ausgangsdrehzahl des Fahrzeugmotors repräsentierender Motordrehzahlwert erfaßt wird. Der zweite Betriebsbereich ist dann dadurch vorgegeben ist, daß in diesem zweiten Betriebsbereich

- der erfaßte Fahrpedalwert größer als ein erster Schwellwert ist, und/oder
- der erfaßte Geschwindigkeitswert größer als ein zweiter Schwellwert ist, und/oder
- der erfaßte Motordrehzahlwert größer als ein dritter Schwellwert ist, und/oder
- die zeitliche Änderung des erfaßten Motordrehzahlwerts kleiner als ein vierter Schwellwert ist.

Zur Erzeugung des Fehlersignals werden nur die Änderungen der Getriebeübersetzung herangezogen werden, die während des Vorliegens des zweiten Betriebsbereichs stattfinden.

Durch diese Ausgestaltung der Erfindung wird vorteilhafterweise sichergestellt, daß der Fahrzeugmotor während des Getriebeschaltvorgangs ausreichend lange in einem Betriebsbereich betrieben wird, in dem die Gangerkennung sicher funktioniert. Insbesondere soll unter anderem das Überfahren einer Schlechtwegstrecke, Antriebsstrangschwingungen, durchdrehende Reifen erkannt werden, die eine sichere Gangerkennung und damit eine sichere Diagnose des Kupplungsschalters in Frage stellen.

Der Kern einer weiteren Erfindungsvariante besteht darin, daß die Diagnose des Kupplungsschalters bei einem Start des Fahrzeugmotors stattfindet. Hierbei wird zunächst ein Start des Fahrzeugmotors erkannt. Das Fehlersignal wird dann in Abhängigkeit von dem erkannten Motorstart, dem vorliegenden Kupplungssignal und der erfaßten Fahrzeuggeschwindigkeit erzeugt.

Hierbei ist insbesondere vorgesehen daß zur Erzeugung des Fehlersignals die Änderung des erzeugten Kupplungssignals, die in Reaktion auf eine nach dem Motorstart erfaßten Änderung des erfaßten Geschwindigkeitswerts stattfindet, ausgewertet wird.

Um ein Anschleppen des Fahrzeugs von der Diagnose auszuschließen, kann vorgesehen sein, daß das Fehlersignal nur dann erzeugt wird, wenn der beim erkannten Motorstart erfaßte Geschwindigkeitswert im wesentlichen Null ist.

Vorteilhafte Ausgestaltungen der Erfindung sind den Unteransprüchen zu entnehmen.

Zeichnung

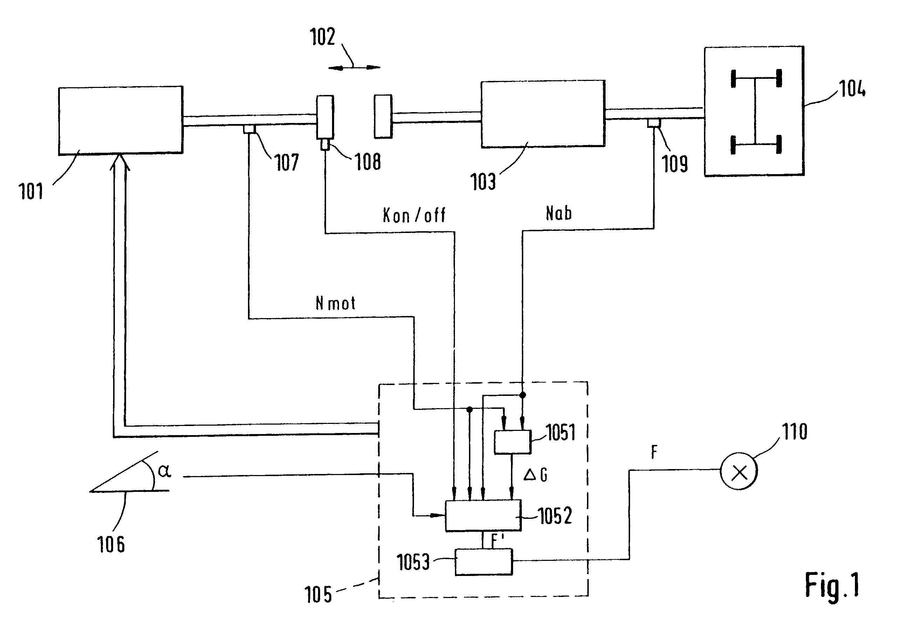

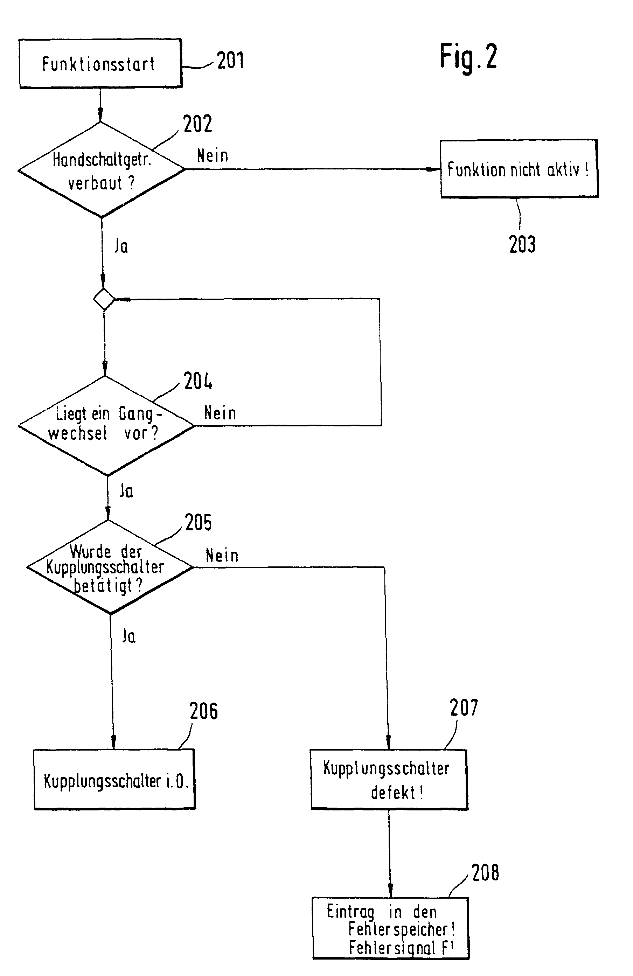

Die Figur 1 zeigt ein Übersichtsbild eines Antriebsstrang mit den erfindungsgemäßen Mitteln. Die Figuren 2, 3 und 4 stellen Ablaufdiagramme unterschiedlicher Ausgestaltungen der Erfindung dar.

Ausführungsbeispiele

Die Erfindung soll im folgenden anhand eines Ausführungsbeispiels näher erläutert werden.

In der Figur 1 ist mit dem Bezugszeichen 101 der Fahrzeugmotor gekennzeichnet, der über die Kupplung 102 und das Getriebe 103 mit den Antriebsrädern 104 des Fahrzeugs verbunden ist. Die Kupplung 102 kann, beispielsweise durch die Betätigung eines (nicht dargestellten) Kupplungspedals, geöffnet oder geschlossen werden. Die Betätigung der Kupplung gibt der Kupplungsschalter 108 durch die Erzeugung des zweistufigen Signals $K_{on/off}$ an. Die Motordrehzahl $N_{mot}$ sowie die Getriebeabtriebsdrehzahl $N_{ab}$ beziehungsweise die Fahrzeuggeschwindigkeit werden durch die Drehzahlsensoren 107 und 109 erfaßt.

Neben den schon beschriebenen Signalen wird auch die Stellung $\alpha$ des vom Fahrer betätigbaren Fahrpedals 106 dem Steuergerät 105 zugeführt. Bei dem in der Figur 1 dargestellten Steuergerät soll es sich um ein Motorsteuergerät handeln, das in Abhängigkeit von den gezeigten (und weiteren) Signalen die Funktionen des Motors steuert beziehungsweise regelt.

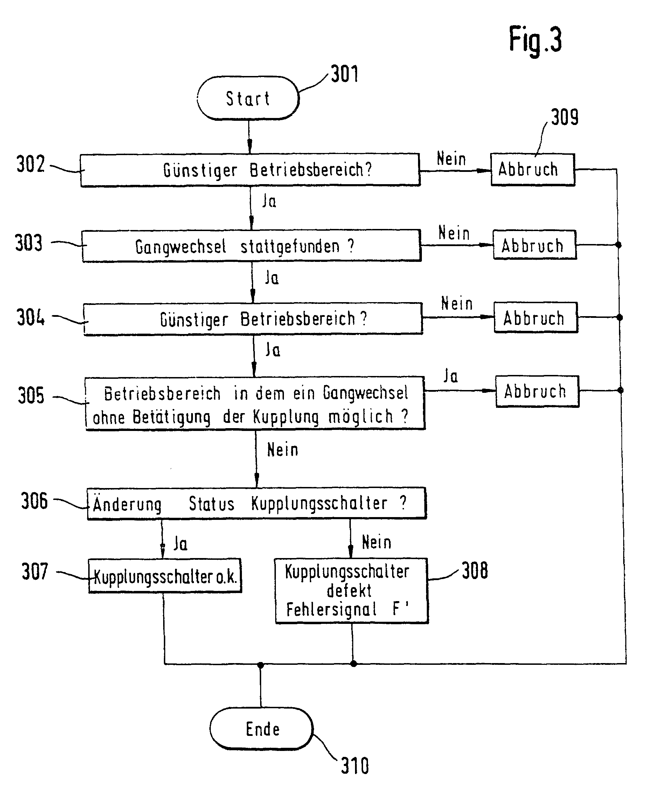

Wesentlich für die Erfindung ist die Gangerkennung 1051 und die Überwachungseinheit 1052, deren Funktionen anhand der Figuren 2 und 3 näher erläutert wird. Die Überwachungseinheit 1052 erzeugt in Reaktion auf einen erkannten Fehler des Kupplungsschalters 108 das Signal F', das zunächst der Speichereinheit 1053 zugeführt wird. Wird eine vorgebbare Anzahl von Fehlern überschritten, so wird das Fehlersignal F der Anzeige- und/oder Fehlerspeichereinheit 110 zugeleitet.

Die Anzeige- und/oder Fehlerspeichereinheit 110 kann dabei derart ausgestaltet sein, daß entweder der erkannte Fehler abrufbar abgespeichert und/oder zur Anzeige gebracht wird.

Die Figur 2 zeigt den Ablauf einer ersten Ausgestaltung der Erfindung.

Nach dem Startschritt 201 wird im Schritt 202 abgefragt, ob es sich bei dem Getriebe 103 um ein Handschaltgetriebe handelt. Ist dies nicht der Fall, so wird die gesamte Funktion inaktiviert, da bei einem konventionellen Automitkgetriebe im allgemeinen kein Kupplungsschalter vorgesehen ist.

Liegt allerdings ein Handschaltgetriebe vor, so wird im Schritt 204 abgefragt, ob ein Gangwechsel $\Delta G$ stattgefunden hat. Die geschieht in der Gangerkennung 1051 (Fig.1) durch eine Auswertung des Drehzahlverhältnisses $N_{mot}/N_{ab}$, das sich abhängig von dem eingelegten Getriebegang ändert.

Die Abfrage 204 wird so lange durchlaufen bis ein Gangwechsel $\Delta G$ vorliegt. Dann wird mit dem Schritt 205 im Block 1052 (Fig.1) durch eine Auswertung des Signal $K_{on/off}$ überprüft, ob der Kupplungsschalter 108 betätigt worden ist. Es wird also überprüft, ob sich während des im Schritt 204 erfaßten Gangwechsels der Signalzustand des Signals $K_{on/off}$ geändert hat.

War dies der Fall, so ist der Kupplungsschalter 107 in Ordnung (Schritt 206), war dies jedoch nicht der Fall, so wird über den Schritt 207 ein Eintrag in den Fehlerspeicher 1053 (Schritt 208) getätigt.

Der in der Figur 2 gezeigte Ablauf wird andauernd durchlaufen.

Über die Ganginformation $\Delta G$ (Schritt 204, Block 1051) wird ein defekter Kupplungsschalter durch Abgabe des Fahlersignals F dann detektiert, wenn eine gewisse im Speicher 1053 gespeicherte Anzahl von Gangwechseln vorliegen, ohne daß eine Kupplungsbetätigung im Schritt 205 erkannt wurde.

Durch die in der Figur 3 gezeigten Ausgestaltung wird die Sicherheit der erfindungsgemäßen Diagnose erhöht. Hierzu wird in den Schritten 302 und 304 überprüft, ob der im Schritt 303 erfaßte Gangwechsel $\Delta G$ (Block 1051 in Fig.1) während eines für die Diagnose günstigen Betriebsbereichs stattfindet. Ein solcher Betriebsbereich liegt dann vor, wenn der Fahrzeugmotor ausreichend lange in einem Betriebsbereich betrieben wird, in dem die Gangerkennung 1051 sicher funktioniert. Wie schon erwähnt geschieht die Gangerkennung durch eine Auswertung des Drehzahlverhältnisses $N_{mot}/N_{ab}$, das sich abhängig von dem eingelegten Getriebegang ändert. Folgende Bedingungen, die unter anderem in den Schritten 302 und 304 (Block 1052 in Fig.1) geprüft werden, zeigen das Vorliegen eines günstigen Betriebsbereichs:

1. Der dem Block 1052 zugeführte Fahrpedalwert $\alpha$ überschreitet einen ersten Schwellwert SW1, und/oder

2. die dem Block 1052 zugeführte und die Fahrzeuglängsgeschwindigkeit $V_{fhzg}$ repräsentierende Getriebeabtriebsdrehzahl $N_{ab}$ ist größer als ein zweiter Schwellwert SW2 ist, und/oder

3. die dem Block 1052 zugeführte Motordrehzahl $N_{mot}$ ist größer als ein dritter Schwellwert SW3, und/oder

4. die im Block 1052 ermittelte zeitliche Änderung $dN_{mot}/dt$ der erfaßten Motordrehzahl $N_{mot}$ ist kleiner als ein vierter Schwellwert SW4.

Insbesondere durch die vierte Bedingungen werden unter anderem das Befahren einer Schlechtwegstrecke, Antriebsstrangschwingungen, durchdrehende Reifen erkannt, die eine sichere Gangerkennung und damit eine sichere Diagnose des Kupplungsschalters in Frage stellen.

Je nach Ausgestaltung kann in den Schritten 302 und 304 geprüft werden, ob alle der oben genannten (und weitere) Bedingungen erfüllt sind oder nur einzelne. Liegt kein günstiger Betriebsbereich vor, so wird die erfindungsgemäße Diagnose abgebrochen (Schritt 309).

Im Schritt 305 wird geprüft, ob ein im Schritt 303 detektierter Gangwechsel unter Umständen auch ohne eine Betätigung der Kupplung möglich gewesen ist. Ein solcher Gangwechsel ist dann möglich, wenn die Getriebedrehzahl und die Motordrehzahl $N_{mot}$ näherungsweise übereinstimmen. In solchen Betriebsbereichen, die getriebegangabhängig bestimmt werden müssen, findet keine Diagnose statt (Abbruch 309).

Hat jedoch ein Gangwechsel in einem für die Gangerkennung günstigen Betriebsbereich stattgefunden und war dieser Gangwechsel auch nicht ohne eine Betätigung der Kupplung möglich, so wird im Schritt 306 abgefragt, ob sich das Ausgangssignal $K_{on/off}$ des Kupplungsschalters während des Schaltvorgangs geändert hat. Ist dies der Fall, so ist der Kupplungsschalter in Ordnung (Schritt 307), ist dies nicht der Fall, so könnte der Kupplungsschalter defekt sein, woraufhin im Schritt 308 durch das Signal F' ein Eintrag in den Fehlerspeicher 1053 (Fig.1) getätigt wird.

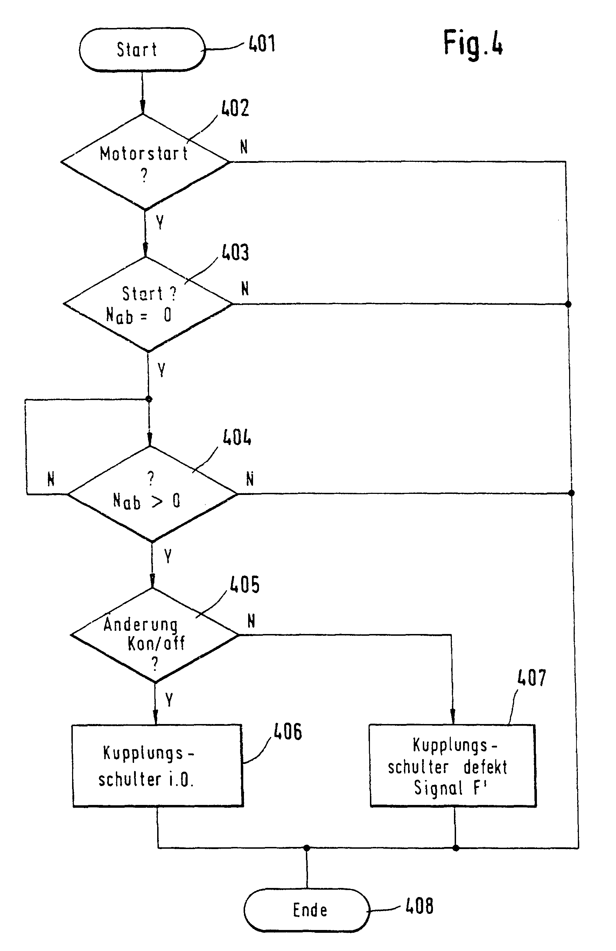

In der anhand der Figur 4 gezeigten Variante kann die Diagnose auch nach einem Start des Motors 101 durchgeführt werden.

Nach dem Startschritt 401 wird zunächst im Schritt 402, beispielsweise durch eine Auswertung der Änderung Motordrehzahl $N_{mot}$, festgestellt, ob ein Motorstart vorliegt. Ist dies der Fall, so wird im Schritt 403 abgefragt, ob die bei dem Motorstart vorliegende Getriebeausgangsdrehzahl $N_{ab}^{start}$ beziehungsweise die Fahrzeuggeschwindigkeit gleich Null ist ($N_{ab}^{start} = 0$).

Vor dem nach dem Motorstart stattfindenden Losfahren des Fahrzeugs ($N_{ab} > 0$, Schritt 404) muß ein Getriebegang eingelegt werden und damit auch eine Betätigung der Kupplung und eine Änderung des Ausgangssignals $K_{on/off}$ des Kupplungsschalters stattfinden. Dies wird im Schritt 405 überprüft. Ist dies der Fall, so ist der Kupplungsschalter in Ordnung (Schritt 406), ist dies nicht der Fall, so könnte der Kupplungsschalter defekt sein, woraufhin im Schritt 407 durch das Signal F' ein Eintrag in den Fehlerspeicher getätigt wird.

Bei der letztgenannten Variante darf allerdings kein Anschleppen des Fahrzeugs stattgefunden haben. Dies wird durch die Bedingung ($N_{ab} = 0$, Schritt 403) beim Motorstart abgefragt.

Ebenso wird ein Anrollen am Berg nach dem Motorstart von der Diagnose ausgeschlossen. Dies geschieht über die Prüfung auf eine Motordrehzahländerung während der Änderung des Ausgangssignals $K_{on/off}$ des Kupplungsschalters und/oder während der Änderung des Getriebegangs (in Fig.4. nicht dargestellt).

**Patentansprüche**

1. Vorrichtung zur Erzeugung eines Fehlersignals (F) bei einem Kraftfahrzeug mit einer im Antriebsstrang des Fahrzeugs angeordneten Kupplung (102) und einem im Antriebsstrang angeordneten und in seiner Getriebeübersetzung veränderbaren Getriebe (103), wobei das Fehlersignal (F) die Funktion eines Kupplungsschalters (108) repräsentiert, der ein die Betätigung der Kupplung (102) repräsentierendes, zweistufiges Kupplungssignal ($K_{on/off}$) erzeugt, mit

   - Erkennungsmitteln (1051), mittels der eine Änderung ($\Delta G$) der Getriebeübersetzung erkannt wird, und
   - Überwachungsmitteln (1052), mittels der das Fehlersignal (F) in Abhängigkeit von der erkannten Änderung ($\Delta G$) und dem erzeugten zweistufigen Kupplungssignal ($K_{on/off}$) erzeugt wird,

   und die derart ausgestaltet sind, daß zur Erzeugung des Fehlersignals (F) die Änderung des erzeugten zweistufigen Kupplungssignals ($K_{on/off}$), die in Reaktion auf die Änderung ($\Delta G$) der Getriebeübersetzung erfaßt wird, ausgewertet wird.

2. Vorrichtung nach Anspruch 1, **dadurch gekennzeichnet, daß** die Überwachungsmittel (1052) derart ausgestaltet sind, daß das Fehlersignal (F) dann erzeugt wird, wenn in Reaktion auf eine vorgebbare Anzahl von Änderungen ($\Delta G$) der Getriebeübersetzung

   - keine Änderung des erzeugten Kupplungssignal ($K_{on/off}$) erfaßt wird oder
   - nur eine vorgebbar geringere Anzahl von Änderungen des erzeugten Kupplungssignal ($K_{on/off}$) als die vorgebbare Anzahl von Änderungen ($\Delta G$) der Getriebeübersetzung erfaßt werden.

3. Vorrichtung nach Anspruch 1, **dadurch gekennzeichnet, daß** die Mittel (108) als Kupplungsschalter ausgelegt sind, dessen Schaltstellung eine Betätigung oder Nichtbetätigung der Kupplung (102) repräsentiert.

4. Vorrichtung nach Anspruch 1, **dadurch gekennzeichnet, daß** die Überwachungsmittel (1052) derart ausgestaltet sind, daß das Vorliegen eines vorgebbaren ersten Betriebsbereichs des Fahrzeugs erfaßt wird und das Fehlersignal (F) weiterhin in Abhängigkeit von dem erfaßten ersten Betriebsbereich erzeugt wird, wobei insbesondere vorgesehen ist, daß der erste Betriebsbereich dadurch vorgegeben ist, daß in diesem ersten Betriebsbereich keine Änderung der Getriebeübersetzung ohne eine Betätigung der Kupplung möglich ist und zur Erzeugung des Fehlersignals (F) nur die Änderungen ($\Delta G$) der Getriebeübersetzung herangezogen werden, die während des Vorliegens des ersten Betriebsbereichs stattfinden.

5. Vorrichtung nach Anspruch 4, **dadurch gekennzeichnet, daß** zur Erfassung des Vorliegens des vorgebbaren ersten Betriebsbereichs Drehzahlgrößen (Nmot, Ne, Nab) erfaßt werden, die die Ausgangsdrehzahl des Fahrzeugmotors (101) und eine am Getriebe (103) vorliegende Drehzahl repräsentieren, und das Vorliegen des ersten Betriebsbereichs abhängig von den erfaßten Drehzahlgrößen erfaßt wird.

6. Vorrichtung nach Anspruch 1, **dadurch gekennzeichnet, daß** die Überwachungsmittel (1052) derart ausgestaltet sind, daß das Vorliegen eines vorgebbaren zweiten Betriebsbereichs des Fahrzeugs erfaßt wird und das Fehlersignal (F) weiterhin in Abhängigkeit von dem erfaßten zweiten Betriebsbereich erzeugt wird, wobei insbesondere vorgesehen ist, daß ein die Stellung des vom Fahrer des Fahrzeugs betätigbaren Fahrpedals (106) repräsentierender Fahrpedalwert ($\alpha$) und/oder ein die Fahrzeuglängsgeschwindigkeit repräsentierender Geschwindigkeitswert ($N_{ab}$) und/oder ein die Ausgangsdrehzahl des Fahrzeugmotors (101) repräsentierender Motordrehzahlwert ($N_{mot}$) erfaßt wird und der zweite Betriebsbereich dadurch vorgegeben ist, daß in diesem zweiten Betriebsbereich

   - der erfaßte Fahrpedalwert ($\alpha$) größer als ein erster Schwellwert (SW1) ist, und/oder
   - der erfaßte Geschwindigkeitswert ($N_{ab}$) größer als ein zweiter Schwellwert (SW2) ist, und/oder
   - der erfaßte Motordrehzahlwert ($N_{mot}$) größer als ein dritter Schwellwert (SW3) ist, und/oder
   - die zeitliche Änderung des erfaßten Motordrehzahlwerts ($N_{mot}$) kleiner als ein vierter Schwellwert (SW4) ist, und zur Erzeugung des Fehlersignals (F) nur die Änderungen ($\Delta G$) der Getriebeübersetzung herangezogen werden, die während des Vorliegens des zweiten Betriebsbereichs stattfinden.

7. Vorrichtung zur Erzeugung eines Fehlersignals (F) bei einem Kraftfahrzeug mit einer im Antriebsstrang des Fahrzeugs angeordneten Kupplung (102) und einem im Antriebsstrang angeordneten und in seiner Getriebeübersetzung veränderbaren Getriebe (103) sowie einen Fahrzeugmotor (101), wobei das Fehlersignal (F) die Funktion eines Kupplungsschalters (108) repräsentiert, der ein die Betätigung der Kupplung (102) repräsentierendes zweistufiges Kupplungssignal ($K_{on/off}$) erzeugt, mit

- Starterkennungsmitteln, mittels der ein Start des Fahrzeugmotors erkannt wird, und
- Erfassungsmitteln (109) zur Erfassung eines die Fahrzeuglängsgeschwindigkeit repräsentierenden Geschwindigkeitswerts ($N_{ab}$) und
- Überwachungsmittel, mittels der das Fehlersignal (F) in Abhängigkeit von dem erkannten Motorstart, dem erzeugten zweistufigen Kupplungssignal ($K_{on/off}$) und dem erfaßten Geschwindigkeitswert ($N_{ab}$) erzeugt wird,

und die derart ausgestaltet sind, daß zur Erzeugung des Fehlersignals (F) die Änderung des erzeugten zweistufigen Kupplungssignal ($K_{on/off}$), die in Reaktion auf eine nach dem Motorstart erfaßten Änderung des erfaßten Geschwindigkeitswerts ($N_{ab}$) stattfindet, ausgewertet wird.

8. Vorrichtung nach Anspruch 7, **dadurch gekennzeichnet, daß** die Überwachungsmittel derart ausgestaltet sind, daß das Fehlersignal nur dann erzeugt wird, wenn der beim erkannten Motorstart erfaßte Geschwindigkeitswert $N_{ab}^{start}$) in wesentlichen Null ist.

9. Verfahren zur Erzeugung eines Fehlersignals (F) bei einem Kraftfahrzeug mit einer im Antriebsstrang des Fahrzeugs angeordneten Kupplung (102) und einem im Antriebsstrang angeordneten und in seiner Getriebeübersetzung veränderbaren Getriebe (103), wobei das Fehlersignal (F) die Funktion eines Kupplungsschalters (108) repräsentiert, der ein die Betätigung der Kupplung repräsentierendes zweistufiges Kupplungssignal ($K_{on/off}$) erzeugt, mit folgenden Schritten:

- Erkennen einer Änderung ($\Delta G$) der Getriebeübersetzung und
- Erzeugen des Fehlersignals (F) in Abhängigkeit von der erkannten Änderung ($\Delta G$) und dem erzeugten zweistufigen Kupplungssignal ($K_{on/off}$), wobei zur Erzeugung des Fehlersignals (F) die Änderung des erzeugten zweistufigen Kupplungssignals ($K_{on/off}$), die in Reaktion auf die Änderung ($\Delta G$) der Getriebeübersetzung erfaßt wird, ausgewertet wird.

10. Verfahren nach Anspruch 9, **dadurch gekennzeichnet, daß** das Fehlersignal (F) dann erzeugt wird, wenn in Reaktion auf eine vorgebbare Anzahl von Änderungen ($\Delta G$) der Getriebeübersetzung

- keine Änderung des erzeugten Kupplungssignal ($K_{on/off}$) erfaßt wird oder
- nur eine vorgebbar geringere Anzahl von Änderungen des erzeugten Kupplungssignal ($K_{on/off}$) als die vorgebbare Anzahl von Änderungen ($\Delta G$) der Getriebeübersetzung erfaßt werden.

11. Verfahren zur Erzeugung eines Fehlersignals (F) bei einem Kraftfahrzeug mit einer im Antriebsstrang des Fahrzeugs angeordneten Kupplung (102) und einem im Antriebsstrang angeordneten und in seiner Getriebeübersetzung veränderbaren Getriebe (103) sowie einen Fahrzeugmotor (101), wobei das Fehlersignal (F) die Funktion eines Kupplungsschalters (108) repräsentiert, der ein die Betätigung der Kupplung (102) repräsentierendes zweistufiges Kupplungssignal ($K_{on/off}$) erzeugt, mit folgenden Schritten:

- Erkennen (402) eines Starts des Fahrzeugmotors,
- Erfassen (109) eines die Fahrzeuglängsgeschwindigkeit repräsentierenden Geschwindigkeitswerts ($N_{ab}$) und
- Erzeugung des Fehlersignals (F) in Abhängigkeit von dem erkannten Motorstart, dem erzeugten zweistufigen Kupplungssignal ($K_{on/off}$) und dem erfaßten Geschwindigkeitswert ($N_{ab}$), wobei zur Erzeugung des Fehlersignals (F) die Änderung des erzeugten zweistufigen Kupplungssignal ($K_{on/off}$), die in Reaktion auf eine nach dem Motorstart erfaßten Änderung des erfaßten Geschwindigkeitswerts ($N_{ab}$) stattfindet, ausgewertet wird.

12. Verfahren nach Anspruch 11, **dadurch gekennzeichnet, daß** das Fehlersignal nur dann erzeugt wird, wenn der beim erkannten Motorstart erfaßte Geschwindigkeitswert $N_{ab}^{start}$) im wesentlichen Null ist.

## Claims

1. Device for generating an error signal (F) in a motor vehicle having a clutch (102) which is arranged in the drive train of the vehicle, and a gearbox (103) which is arranged in the drive train and has a variable transmission ratio, the error signal (F) representing the function of a clutch switch (108) which generates a clutch signal ($K_{on/off}$) which represents the activation of the clutch (102), having

- detection means (1051) by means of which a change ($\Delta G$) in the transmission ratio is detected, and

- monitoring means (1052) by means of which the error signal (F) is generated as a function of the detected change ($\Delta G$) and the generated two-stage clutch signal ($K_{on/off}$),
- and which is configured in such a way that, in order to generate the error signal (F), the change in the generated two-stage clutch signal ($K_{on/off}$) which is registered in reaction to the change ($\Delta G$) in the transmission ratio is evaluated.

2. Device according to Claim 1, **characterized in that** the monitoring means (1052) are configured in such a way that the error signal (F) is generated when, in reaction to a predefinable number of changes ($\Delta G$) in the transmission ratio,

   - no change in the generated clutch signal ($K_{on/off}$) is registered or
   - only a predefinably lower number of changes are registered in the generated clutch signal ($K_{on/off}$) than the predefinable number of changes ($\Delta G$) in the transmission ratio.

3. Device according to Claim 1, **characterized in that** the means (108) are configured as a clutch switch whose switched position represents actuation or non-actuation of the clutch (102).

4. Device according to Claim 1, **characterized in that** the monitoring means (1052) are configured in such a way that the presence of a predefinable first operating range of the vehicle is registered and the error signal (F) continues to be generated as a function of the registered first operating range, there being in particular provision that the first operating range is predefined by virtue of the fact that no change is possible in the transmission ratio in this first operating range unless the clutch is activated, and only the changes ($\Delta G$) in the transmission ratio which take place during the presence of the first operating range are used to generate the error signal (F).

5. Device according to Claim 4, **characterized in that**, in order to register the presence of the predefinable first operating range, rotational speed variables (Nmot, Ne, Nab) which represent the output rotational speed of the vehicle engine (101) and a rotational speed present at the gearbox (103) are registered, and the presence of the first operating range is registered as a function of the detected rotational speed variables.

6. Device according to Claim 1, **characterized in that** the monitoring means (1052) are configured in such a way that the presence of a predefinable second operating range of the vehicle is registered, and the error signal (F) continues to be generated as a function of the registered second operating range, there being in particular provision that an accelerated pedal value ($\alpha$) which represents the position of the accelerator pedal (106) which can be activated by the driver of the vehicle, and/or a speed value ($N_{ab}$) which represents the longitudinal speed of the vehicle and/or an engine rotational speed value ($N_{mot}$) which represents the output rotational speed of the vehicle engine (101) is registered, and the second operating range is predefined **in that**, in this second operating range,

   - the registered accelerated pedal value ($\alpha$) is greater than a first threshold value (SW1), and/or
   - the registered speed value ($N_{ab}$) is greater than a second threshold value (SW2), and/or
   - the registered engine rotational speed value ($N_{mot}$) is greater than a third threshold value (SW3), and/or
   - the change of time in the registered engine rotational speed value ($N_{mot}$) is smaller than a fourth threshold value (SW4), and only the changes ($\Delta G$) in the transmission ratio which take place during the presence of the second operating range are used to generate the error signal (F).

7. Device for generating an error signal (F) in a motor vehicle with a clutch (102) which is arranged in the drive train of the vehicle, and a gearbox (103) which is arranged in the drive train and whose transmission ratio can be varied, and a vehicle engine (101), the error signal (F) representing the function of a clutch switch (108') which generates a two-stage clutch signal ($K_{on/off}$) which represents the activation of the clutch (102), having

   - starter detection means by means of which a start of the vehicle engine is detected, and
   - registering means (109) for registering a speed value ($N_{ab}$) which represents the longitudinal speed of the vehicle, and
   - monitoring means by means of which the error signal (F) is generated as a function of the detected engine start, the generated two-stage clutch signal ($K_{on/off}$) and the registered speed value ($N_{ab}$),

   and which is configured in such a way that the change in the generated two-stage clutch signal, ($K_{on/off}$) which takes place in reaction to a change in the registered speed value ($N_{ab}$) which is registered after the engine start, is evaluated in order to generate the error signal (F).

8. Device according to Claim 7, **characterized in that** the monitoring means are configured in such a way that the error signal is generated only if the speed value ($N_{ab}^{start}$) which is registered when the engine start is detected is essentially zero.

9. Method for generating an error signal (F) in a motor vehicle with a clutch (102) which is arranged in the drive train of the vehicle, and a gearbox (103) which is arranged in the drive train and whose transmission ratio is variable, the error signal (F) representing the function of a clutch switch (108) which generates a two-stage clutch signal ($K_{on/off}$) which represents the activation of the clutch, having the following steps:

- a change ($\Delta G$) in the transmission ratio is detected, and
- the error signal (F) is generated as a function of the detected change ($\Delta G$) and the generated two-stage clutch signal ($K_{on/off}$),

the change in the generated two-stage clutch signal ($K_{on/off}$), which is registered in reaction to the change ($\Delta G$) in the transmission ratio, being evaluated in order to generate the error signal (F).

10. Method according to Claim 9, **characterized in that** the error signal (F) is generated when, in reaction to a predefinable number of changes ($\Delta G$) in the transmission ratio,

- no change in the generated clutch signal ($K_{on/off}$) is registered or
- only a predefinably lower number of changes are registered in the generated clutch signal ($K_{on/off}$) than the predefinable number of changes ($\Delta G$) in the transmission ratio.

11. Method for generating an error signal (F) in a motor vehicle with a clutch (102) which is arranged in the drive train of the vehicle and a gearbox (103) which is arranged in the drive train and whose transmission ratio is variable, and a vehicle engine (101), the error signal (F) representing the function of a clutch switch (108) which generates a two-stage clutch signal ($K_{on/off}$) which represents the activation of the clutch (102), having the following steps:

- detection (402) of a start of the vehicle engine,
- registering (109) of a speed value ($N_{ab}$) which represents the longitudinal speed of the vehicle, and
- generation of the error signal (F) as a function of the detected engine start, the generated two-stage clutch signal ($K_{on/off}$) and the registered speed value ($N_{ab}$),
- the change in the generated two-stage clutch signal ($K_{on/off}$), which takes place in reaction to a change in the registered speed value ($N_{ab}$) which is registered after the engine start, being evaluated in order to generate the error signal (F).

12. Method according to Claim 11, **characterized in that** the error signal is generated only if the speed value ($N_{ab}^{start}$) which is registered when the detected engine start occurs is essentially zero.

## Revendications

1. Dispositif pour générer un signal d'erreur ou de défaut (F) danns le cas d'un véhicule dont la ligne de transmission comporte un embrayage (102) et une boîte de vitesses (103) de rapport variable dans la ligne de transmission,
le signal de défaut (F) représentant le fonctionnement d'un commutateur d'embrayage (108) qui génère un signal d'embrayage ($K_{M/A}$) à deux niveaux, représentant l'actionnement de l'embrayage (102), comprenant

- des moyens de détection (1051) pour détecter un changement ($\Delta G$) d'un rapport de vitesses de la boîte de vitesses, et
- des moyens de surveillance (1052) à l'aide desquels on génère le signal de défaut (F) en fonction de la variation détectée ($\Delta G$) et du signal d'embrayage à deux niveaux, généré ($K_{M/A}$), et
- ces moyens sont réalisés pour exploiter la variation du signal d'embrayage à deux niveaux ($K_{M/A}$) détectée en réaction au changement ($\Delta G$) du rapport de boîte de vitesses pour générer le signal de défaut (F).

2. Dispositif selon la revendication 1,
**caractérisé en ce que**
les moyens de surveillance (1050) sont réalisés pour générer le signal de défaut (F) si en réaction à un nombre prédéterminé de changements ($\Delta G$) de rapport de vitesses,

- on ne détecte aucune variation du signal d'embrayage généré ($K_{M/A}$) ou
- si on saisit seulement un nombre de changements du signal d'embrayage généré ($K_{M/A}$) inférieur au nombre prédéterminé ($\Delta G$) de rapport de vitesses.

3. Dispositif selon la revendication 1,
**caractérisé en ce que**
les moyens (108) sont réalisés par un interrupteur d'embrayage dont la position de commutation représente l'actionnement ou le non-actionnement de l'embrayage (102).

**4.** Dispositif selon la revendication 1, **caractérisé en ce que**
les moyens de surveillance (1052) sont conçus pour saisir l'existence d'une première plage de fonctionnement prédéterminée du véhicule et le signal de défaut (F) est toujours généré en fonction de la première plage de fonctionnement saisie, en particulier la première plage de fonctionnement est prédéterminée **en ce que** dans cette première plage de fonctionnement, aucun changement de rapport de boite de vitesses est possible sans actionner l'embrayage et pour générer le signal de défaut (F) on utilise seulement les changements ($\Delta G$) de rapport de boîte de vitesses qui se produisent au cours de la première plage de fonctionnement.

**5.** Dispositif selon la revendication 4, **caractérisé en ce que**
pour saisir l'existence de la première plage de fonctionnement prédéterminée on saisit des vitesses de rotation (Nmot, Ne, Nab) qui représentent la vitesse de rotation de sortie du moteur (101) et une vitesse de rotation de la boîte de vitesses (103) et on saisit l'existence de la première plage de fonctionnement suivant les grandeurs saisies de la vitesse de rotation.

**6.** Dispositif selon la revendication 1, **caractérisé en ce que**
les moyens de surveillance (1052) sont réalisés pour saisir la présence d'une seconde plage de fonctionnement prédéterminée du véhicule et le signal de défaut (F) continue d'être généré suivant la seconde plage de fonctionnement saisie, et il est notamment prévu de saisir une valeur ($\alpha$) représentant la position de la pédale d'accélérateur (106) actionnée par le conducteur et/ou une valeur de vitesse ($N_{ab}$) représentant la vitesse longitudinale du véhicule et/ou une valeur de régime moteur ($N_{mot}$) représentant la vitesse de rotation de sortie du moteur (101) du véhicule.
on prédétermine ainsi la seconde plage de fonctionnement **en ce que** dans cette seconde plage de fonctionnement,

- la valeur saisie de la pédale d'accélérateur ($\alpha$) est supérieure à un prernier seuil (SW1), et/ou
- la valeur de vitesse saisie ($N_{ab}$) est supérieure à un second seuil (SW2), et/ou
- la valeur du régime moteur saisie ($N_{mot}$) est supérieure à un troisième seuil (SW3), et/ou
- le changement dans le temps de la valeur saisie du régime moteur ($N_{mot}$) est inférieur à un quatrième seuil (SW4), et
- pour générer le signal de défaut (F) on utilise seulement les variations ($\Delta G$) de rapport de boîte de vitesses qui se produisent pendant la seconde plage de fonctionnement.

**7.** Dispositif pour générer un signal de défaut (F) dans un véhicule équipé d'un embrayage (102) dans la ligne de transmission et d'une boîte de vitesses (103) de rapport variable installée dans la ligne de transmission ainsi qu'un moteur (101), le signal de défaut (F) représentant le fonctionnement d'un interrupteur d'embrayage (108) qui génère un signal d'embrayage ($K_{M/A}$) à deux niveaux représentant l'actionnemen de l'embrayag (102),

- des moyens de détection de démarrage qui détectent des démarrages du moteur du véhicule,
- des moyens de saisie (109) pour saisir une valeur de vitesse ($N_{ab}$) représentant la vitesse du véhicule, et/ou
- des moyens de surveillance à l'aide desquels on génère le signal de défaut (F) en fonction de la détection du démarrage du moteur, du signal d'embrayage à deux niveaux ($K_{M/A}$) généré et de la valeur de la vitesse ($N_{ab}$) saisie, et
- ces moyens sont réalises pour exploiter la variation du signal d'embrayage à deux niveaux généré ($K_{M/A}$) produit en réaction à un changement détecté après le démarrage du moteur de la valeur de vitesse saisie ($N_{ab}$), pour générer le signal de défaut (F).

**8.** Dispositif selon la revendication 7, **caractérisé en ce que**
les moyens de surveillance sont réalisés pour ne générer le signal de défaut que si, le démarrage du moteur étant reconnu, la valeur de la vitesse saisie $N_{ab}^{dem}$ est essentiellement nulle.

**9.** Procédé pour générer un signal de défaut (F) dans un véhicule équipé d'une ligne de transmission avec un embrayage (102) et une boîte de vitesses (103) de rapport variable installée dans la ligne de transmission, le signal de défaut (F) représentant la fonction d'un commutateur d'embrayage (108) générant un signal d'embrayage à deux niveaux ($K_{M/A}$) représentant l'actionnement de l'embrayage et correspondant aux étapes suivantes :

- on détecte une variation ($\Delta G$) du rapport de transmission de vitesse, et
- on génère le signal de défaut (F) en fonction de la variation détectée ($\Delta G$) et du signal d'embrayage à deux niveaux, obtenu ($K_{M/A}$),

procédé selon lequel :

pour générer le signal de défaut (F) on exploite le changement du signal d'embrayage à deux niveaux ($K_{M/A}$) qui saisit la réaction de la variation ($\Delta G$) de démultiplication de vitesse.

**10.** Procédé selon la revendication 9,

**caractérisé en ce qu'**

- on génère le signal de défaut (F) si en réaction à un nombre prédéterminé de variations ($\Delta G$) de rapport de vitesses,
- on ne saisit pas de changement du signal d'embrayage généré ($K_{M/A}$), ou
- on ne saisit qu'un nombre prédéterminé faible de changements du signal d'embrayage détecté ($K_{M/A}$) inférieur au nombre prédéterminé de changements ($\Delta G$) de rapport de boîte de vitesses.

11. Procédé pour générer un signal de défaut (F) dans un véhicule ayant un embrayage (102) dans la ligne de transmission et une boîte de vitesses (103) de rapport variable dans la ligne de transmission ainsi qu'un moteur (101),
le signal de défaut (F) représentant le fonctionnement d'un interrupteur d'embrayage (108), qui génère un signal d'embrayage ($K_{M/A}$) représentant l'actionnement de l'embrayage (102), selon les étapes suivantes :

- on détecte (402) le démarrage du moteur du véhicule,
- on détecte (109) une valeur de vitesse ($N_{ab}$) représentant la vitesse longitudinale du véhicule, et
- on génère le signal de défaut (F) en fonction du démarrage du moteur, détecté, du signal d'embrayage à deux niveaux, généré ($K_{M/A}$) ainsi que la valeur saisie de la vitesse ($N_{ab}$),

procédé selon lequel :

pour générer le signal de défaut (F) on exploite le changement du signal d'embrayage ($K_{M/A}$) à deux niveaux, qui se produit en réaction à un changement saisi après le démarrage du moteur de la valeur de la vitesse ($N_{ab}$).

12. Procédé selon la revendication 11,
**caractérisé en ce qu'**
on génère le signal de défaut seulement si, un démarrage du moteur ayant été reconnu, la valeur de la vitesse saisie $N_{ab}^{dem}$ est essentiellement nulle.

Fig.1

Fig.2

```
┌──────────────────┐
│  Funktionsstart  │────── 201
└──────────────────┘
         │
         ▼
      ╱────────╲            202
    ╱  Handschaltgetr. ╲  Nein        ┌──────────────────────┐
   ╲   verbaut ?     ╱ ──────────────▶│ Funktion nicht aktiv! │
    ╲────────╱                        └──────────────────────┘
         │                                       │
        Ja                                      203
         │
         ▼
        ◇◀────────────────────────────┐
         │                             │
         ▼                             │
      ╱────────╲          204          │
    ╱ Liegt ein Gang- ╲  Nein          │
   ╲   wechsel   vor? ╱ ───────────────┘
    ╲────────╱
         │
        Ja
         │
         ▼
      ╱────────╲          205
    ╱  Wurde der      ╲  Nein
   ╲ Kupplungsschalter ╱ ──────────────┐
    ╲  betätigt?    ╱                   │
    ╲────────╱                          │
         │                              │
        Ja                              │
         │                              │
         ▼                              ▼
    206                            207
┌─────────────────────┐      ┌─────────────────────┐
│ Kupplungsschalter   │      │ Kupplungsschalter   │
│      i.O.           │      │     defekt!         │
└─────────────────────┘      └─────────────────────┘
                                       │
                                       ▼
                                  208
                             ┌─────────────────────┐
                             │ Eintrag  in den     │
                             │ Fehlerspeicher!     │
                             │ Fehlersignal F'     │
                             └─────────────────────┘
```

Fig.3

301 Start

302 Günstiger Betriebsbereich? →Nein→ Abbruch 309

Ja

303 Gangwechsel stattgefunden ? →Nein→ Abbruch

Ja

304 Günstiger Betriebsbereich? →Nein→ Abbruch

Ja

305 Betriebsbereich in dem ein Gangwechsel ohne Betätigung der Kupplung möglich ? →Ja→ Abbruch

Nein

306 Änderung Status Kupplungsschalter ?

Ja                    Nein

307 Kupplungsschalter o.k.

308 Kupplungsschalter defekt Fehlersignal F'

Ende 310

13

**Fig.4**

Start — 401

Motorstart ? — 402 — N

Y

Start ?
Nab = 0 — 403 — N

Y

? — 404 — N
N — Nab > 0

Y

Änderung
Kon/off
? — 405 — N

Y

Kupplungsschulter i.O. — 406

Kupplungsschulter defekt
Signal F' — 407

Ende — 408

14